Europäisches Patentamt

European Patent Office

Office européen des brevets

(19)

(11) **EP 1 602 993 A2**

(12) **DEMANDE DE BREVET EUROPEEN**

(43) Date de publication:
**07.12.2005 Bulletin 2005/49**

(51) Int Cl.$^7$: **G05B 19/416**, B62D 5/04

(21) Numéro de dépôt: **05300435.4**

(22) Date de dépôt: **31.05.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **01.06.2004 FR 0405866**

(71) Demandeur: **Renault s.a.s.**
**92100 Boulogne Billancourt (FR)**

(72) Inventeurs:
• **Leminoux, Gérald**
  **78980 LONGNES (FR)**
• **Guegan, Stéphane**
  **78000 Versailles (FR)**
• **Pothin, Richard**
  **92420 VAUCRESSON (FR)**

(54) **Procédé de commande d'un organe au moyen d'une consigne de position**

(57) Dans le procédé de commande d'un organe de véhicule selon l'invention, on commande un déplacement d'une pièce au moyen d'une consigne de position. On commande ce déplacement à une vitesse inférieure ou égale à une vitesse maximale prédéterminée.

FIG.1

**Description**

L'invention concerne la commande des organes de véhicule dans lesquels un déplacement d'une pièce s'effectue au moyen d'une consigne de position.

L'invention concerne notamment tous les organes de véhicule dans lesquels la position d'une pièce est commandée de façon partiellement ou totalement automatique en fonction de différents paramètres et en particulier de la position de la pièce par rapport à des butées de fin de course limitant mécaniquement le déplacement de la pièce.

On connaît par exemple du document FR-2 832 6984 au nom de la demanderesse une direction assistée électrique de véhicule automobile dans laquelle un moteur électrique fournit à la colonne de direction un couple qui est fonction notamment de la position angulaire du volant. Lorsque la position angulaire du volant se rapproche de l'une des butées de fin de course, le moteur génère un couple de durcissement qui rend plus difficile la manoeuvre du volant en direction de la butée la plus proche.

Les dispositifs de commande automatique de ce type sont appelés systèmes actifs. L'objectif de ces systèmes est d'améliorer la sécurité, le comportement et/ou le confort du véhicule.

Dans la plupart de ces systèmes, ainsi que c'est le cas dans l'exemple précité, la position de la pièce mobile est limitée mécaniquement par des butées de fin de course. Or, l'arrivèe brutale de la pièce contre l'une ou l'autre de ces butées risque d'endommager le dispositif. Des dispositifs mécaniques de blocage de course peuvent alors être prévus pour pallier cet inconvénient. Toutefois, ces dispositifs ne donnent pas toujours satisfaction. En particulier, ils impliquent souvent de limiter exagérément la plage de déplacement de la pièce.

Un but de l'invention est de préserver les butées de fin de course du dispositif sans engendrer cette limitation en amplitude.

A cet effet, on prévoit selon l'invention un procédé de commande d'un organe de véhicule dans lequel on commande un déplacement d'une pièce au moyen d'une consigne de position et à une vitesse inférieure ou égale à une vitesse maximale prédéterminée.

Ainsi, en limitant la vitesse de déplacement à une vitesse maximale prédéterminée, on empêche la pièce de venir heurter les butées de fin de course avec une vitesse trop grande. Cela permet de préserver l'organe du véhicule qui est commandé au moyen de ce système de pilotage.

Le procédé selon l'invention pourra présenter en outre au moins l'une quelconque des caractéristiques suivantes :

- on détermine une position de la pièce ;
- on détermine dans quelle zone se trouve la pièce parmi au moins deux zones prédéterminées ;
- on détermine une vitesse de la pièce ;
- on détermine un sens de déplacement de la pièce ;
- on détermine si la pièce se déplace en direction opposée à la limite de course la plus proche parmi deux limites de course de la pièce ;
- on compare une position de la pièce avec au moins une limite de course prédéterminée ;
- on compare une position de la pièce avec au moins un seuil prédéterminé différent d'une limite de course ;
- on compare une vitesse de la pièce avec la vitesse maximale ;
- on détermine au moins l'une parmi la vitesse de déplacement et la vitesse maximale en fonction d'une position de la pièce ;
- on détermine au moins l'une parmi la vitesse de déplacement et la vitesse maximale en fonction d'un sens de déplacement de la pièce ;
- on commande le déplacement de sorte qu'il existe un ensemble de positions de la pièce telles qu'à deux positions quelconques de l'ensemble on associe des vitesses maximales différentes ;
- on commande le déplacement de sorte qu'il existe un ensemble de positions de la pièce telles que la vitesse maximale est identique pour toutes les positions de cet ensemble ;
- on commande le déplacement à une vitesse inférieure à la vitesse maximale prédéterminée ; et
- on commande le déplacement à la vitesse maximale prédéterminée.

Par ailleurs, on prévoit selon l'invention un dispositif de commande d'un organe de véhicule comprenant des moyens de commande d'un déplacement d'une pièce au moyen d'une consigne de position dans lequel ces moyens de commande sont agencés pour commander le déplacement à une vitesse inférieure ou égale à une vitesse maximale prédéterminée.

D'autres caractéristiques et avantages de l'invention apparaîtront encore dans la description suivante d'un mode préféré de réalisation donné à titre d'exemple non limitatif en référence aux dessins annexés sur lesquels :

- la figure 1 est un diagramme consigne-vitesse illustrant la zone de travail et le gabarit associé dans le présent mode de réalisation de l'invention ;

- la figure 2 est un organigramme illustrant les principales étapes du mode préféré de réalisation de l'invention ;
- la figure 3 est un organigramme s'intégrant dans l'une des branches de l'organigramme de la figure 2 ;
- la figure 4 est un diagramme analogue à celui de la figure 1 illustrant les zones associées à l'organigramme de la figure 3 ;
- les figures 5, 6, 7 et 8 sont des vues analogues aux figures 3 et 4 correspondant à d'autres parties de l'organigramme de la figure 2 ;
- les figures 9 et 10 sont deux courbes illustrant l'évolution d'un signal d'entrée et d'un signal de sortie en fonction du temps en vue de l'établissement du diagramme de la figure 1 ;
- la figure 11 montre l'évolution d'une consigne et de la consigne saturée correspondante en fonction du temps à partir des données des figures 9 et 10 , et
- la figure 12 est un diagramme consigne-vitesse saturée correspondant aux données de la figure 11.

Nous allons décrire un mode préféré de réalisation de l'invention qui constitue un procédé de commande d'un organe de véhicule mis en oeuvre par un système actif. Cet organe sera par exemple une direction assistée électrique, la pièce dont la position est commandée étant une crémaillère de direction. Néanmoins, l'invention est applicable à tout autre type d'organe dans lequel la position d'une pièce de l'organe est commandée de façon automatique ou semi-automatique par un système de pilotage au moyen d'une consigne de position.

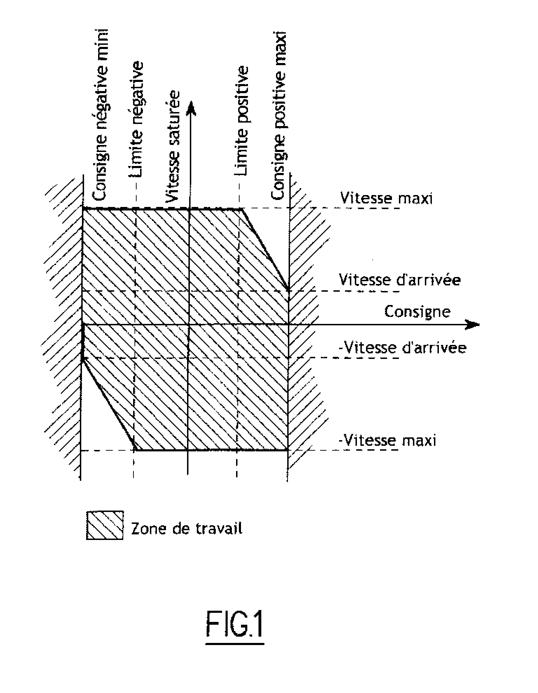

En référence à la figure 1, le mode préféré de réalisation de l'invention met en oeuvre une zone de travail constituant un gabarit. Sur ce diagramme, on a représenté en abscisse la position de la pièce et en ordonnée sa vitesse.

La course de déplacement de la pièce est limitée mécaniquement à ses deux extrémités par des butées et dans le cadre du procédé par deux valeurs, respectivement « consigne positive maxi » et « consigne positive mini ». L'abscisse 0 correspond au milieu de la course de déplacement, les abscisses étant positives du côté de la consigne positive maxi et négatives lorsque la pièce se trouve entre le 0 et la consigne négative mini. Le procédé selon l'invention met également en oeuvre dans le présent exemple deux seuils, à savoir une limite positive correspondant à une abscisse inférieure à la consigne positive maxi, et une limite négative correspondant à une abscisse supérieure à la consigne négative mini. La limite positive représente la valeur de la position de la pièce à partir de laquelle la vitesse maximum sera définie d'une façon particulière dans certaines circonstances comme on le verra dans la suite. Il en est de même pour la limite négative.

Pareillement, la vitesse est limitée par une valeur « vitesse maxi » et une valeur « - vitesse maxi ». La vitesse est mesurée positivement lorsque la pièce se déplace en direction de la consigne positive maxi et négativement dans le cas contraire. Enfin, deux seuils intermédiaires dénommés respectivement « vitesse d'arrivée » et « - vitesse d'arrivée » sont également définis et représentent la vitesse maximale de la pièce lorsqu'elle atteint respectivement la consigne positive maxi et la consigne positive mini.

Les huit valeurs ainsi définies sont fixes lors de la mise en oeuvre du procédé mais peuvent être préalablement réglées en fonction notamment des souhaits de l'utilisateur final du véhicule.

Compte tenu de ces limites, quel que soit le stade du fonctionnement de l'organe, la situation de la pièce représentée par le couple consigne et vitesse sera toujours dans la zone de travail hachurée sur la figure 1. C'est en fonction du gabarit ainsi défini que sera commandé le déplacement de la pièce par le procédé. Comme on le verra dans la suite, l'algorithme de mise en oeuvre du procédé distingue différentes zones à l'intérieur de ce gabarit et commande le déplacement de la pièce en fonction de la zone dans laquelle on se situe.

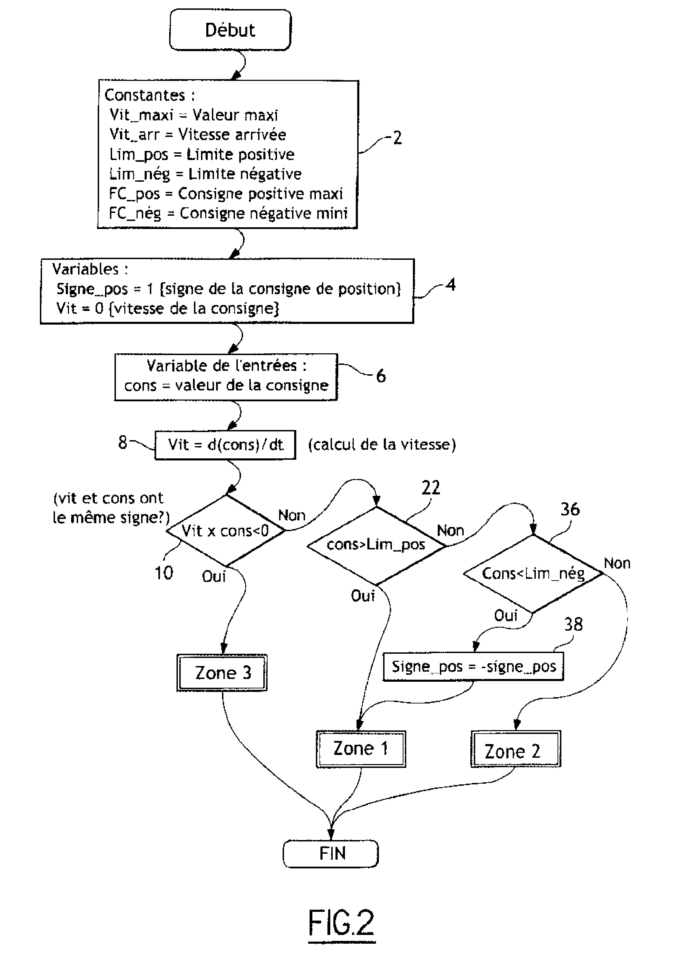

En référence à la figure 2, la mise en oeuvre du procédé utilise comme constantes les valeurs qui ont été présentées en référence à la figure 1. Il s'agit de l'encadré 2. Il utilise ensuite comme variable d'une part le signe de la position de la pièce qui est initialement positif, et d'autre part la vitesse de la pièce qui est initialement prise égale à 0, comme illustré à l'encadré 4.

Le dispositif de commande mettant en oeuvre le procédé de l'invention comprend des moyens connus en eux-mêmes pour déterminer à chaque instant la position de la pièce. Cette position constitue une variable, comme illustré à l'encadré 6.

A partir de l'évolution de la position de la pièce, le dispositif de commande calcule la vitesse instantanée de la pièce, comme illustré à l'encadré 8.

Dans une étape ultérieure qui constitue un test illustré à l'encadré 10, le dispositif détermine si la vitesse et la position de la pièce ont le même signe. Pour cela, il détermine le signe du produit de la vitesse par la position.

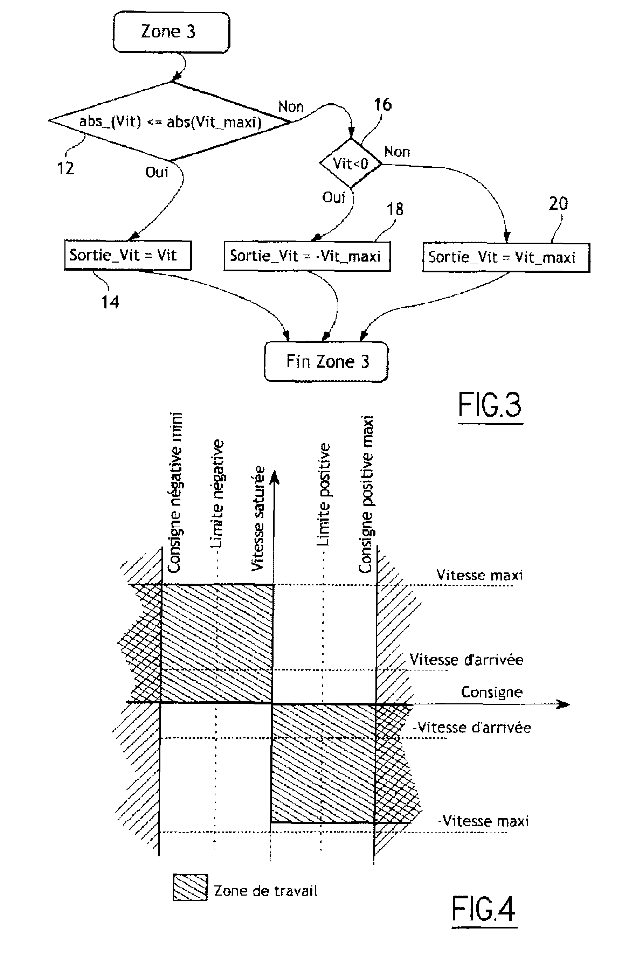

Si la réponse à ce test est positive, le dispositif met en oeuvre la partie de l'algorithme associée à la zone 3, comme illustré aux figures 3 et 4. Cette partie de l'algorithme correspond aux zones de travail illustrées à la figure 4. Ces zones sont situées dans les deuxième et quatrième quadrants du repère. Dans le deuxième quadrant, l'abscisse de la pièce est positive et limitée par la seule consigne positive maxi, tandis que la vitesse de la pièce est négative et limitée par la valeur «- vitesse maxi ». Symétriquement, dans le quatrième quadrant, l'abscisse de la pièce est négative et limitée par la consigne négative mini tandis que la vitesse de la pièce est positive et limitée par la vitesse maxi.

Comme illustré à l'encadré 12, cette partie du procédé met en oeuvre tout d'abord un test qui consiste à déterminer si la valeur absolue de la vitesse est inférieure ou égale à la valeur absolue de la vitesse maxi. Dans l'affirmative, cela signifie que la vitesse de la pièce n'excède pas le maximum autorisé. Le procédé commande alors le déplacement de la pièce avec la vitesse qui a été calculée, comme illustré à l'encadré 14. Si la réponse au test 12 est négative, cela signifie que la vitesse de la pièce excède la valeur maximale. Le procédé met alors en oeuvre le test 16 qui consiste à déterminer si la vitesse de la pièce est négative. Dans cette hypothèse, on se trouve dans le deuxième quadrant et le procédé commande le déplacement de la pièce à la vitesse « - vitesse maxi » afin de limiter cette vitesse. Il s'agit de l'encadré 18. Dans le cas contraire, il commande la vitesse à la valeur vitesse maxi, comme illustré à l'encadré 20.

Dans l'hypothèse où le résultat du test 10 de la figure 2 est négatif, le procédé met en oeuvre un nouveau test 22 qui consiste à déterminer si la position de la pièce dépasse la limite positive.

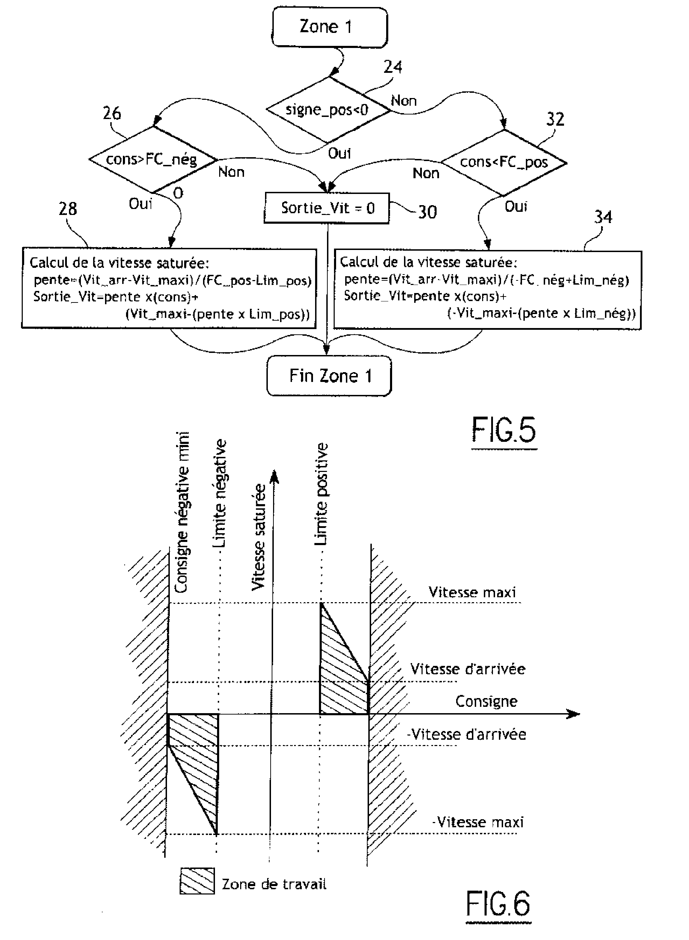

Dans ce cas, c'est le traitement associé à la zone 1 et aux figures 5 et 6 qui est prévu. Ce traitement débute par un test 24 qui vise à déterminer si l'abscisse de la pièce se trouve dans la zone des abscisses négatives. Si c'est le cas, le procédé met en oeuvre un nouveau test 26 qui vise à déterminer si la pièce dépasse la consigne négative mini. Si c'est le cas, alors la pièce se situe dans la zone de travail du troisième quadrant sur le diagramme de la figure 6. Dans cette zone, la vitesse maximale autorisée n'est pas constante pour tous les points de la zone et est directement fonction de l'abscisse de la pièce. En particulier, la valeur absolue de la vitesse diminue à mesure qu'augmente l'abscisse en valeur absolue. Cette variation se fait suivant un segment de droite.

A l'encadré 28, le procédé met alors en oeuvre le calcul d'une pente suivant la formule suivante :

$$\text{pente} = (\text{Vit\_arr} - \text{Vit\_maxi}) / (\text{FC\_pos} - \text{Lim\_pos})$$

Il calcule ensuite la vitesse de sortie suivant la formule suivante :

$$\text{Sortie\_Vit} = \text{pente} \times (\text{cons}) + (\text{Vit\_maxi} - (\text{pente} \times \text{Lim\_pos}))$$

Le procédé commande alors le déplacement de la pièce à la vitesse maximale ainsi calculée.

Dans l'hypothèse où la réponse au test 26 est négative, alors cela signifie que la pièce a dépassé la consigne négative mini de sorte que le procédé commande l'immobilisation de la pièce, comme illustré à l'encadré 30.

Dans l'hypothèse où la réponse au test 24 est négative, cela signifie que la pièce se trouve dans la zone de travail illustrée au premier quadrant de la figure 6. De même que précédemment, l'algorithme met alors en oeuvre le test 32 qui consiste à déterminer si la position de la pièce est inférieure à la consigne positive maxi.

Dans l'affirmative, le calcul de la vitesse maximale autorisée dépend de l'abscisse de la pièce. La commande du déplacement de la pièce se fait donc avec la vitesse calculée au moyen des deux égalités suivantes, comme illustré à l'encadré 34 :

Calcul de la vitesse saturée :

$$\text{pente} = (\text{Vit\_arr} - \text{Vit\_maxi}) / (- \text{FC\_neg} + \text{Lim\_neg})$$

$$\text{Sortie\_Vit} = \text{pente} \times (\text{cons}) + (- \text{Vit\_maxi} - (\text{pente} \times \text{Lim\_neg}))$$

Le procédé commande alors le déplacement de la pièce à la vitesse maximale ainsi calculée.

Enfin, si sur la figure 2 la réponse au test 22 est négative, le procédé met en oeuvre le test 36 qui consiste à déterminer si la position de la consigne est inférieure à la limite négative. Si la réponse est positive, alors le procédé commande une inversion du signe de l'abscisse de la pièce, comme illustré à l'encadré 38. Il met ensuite en oeuvre le même traitement que celui mis en oeuvre pour la zone 1, comme illustré aux figures 5 et 6.

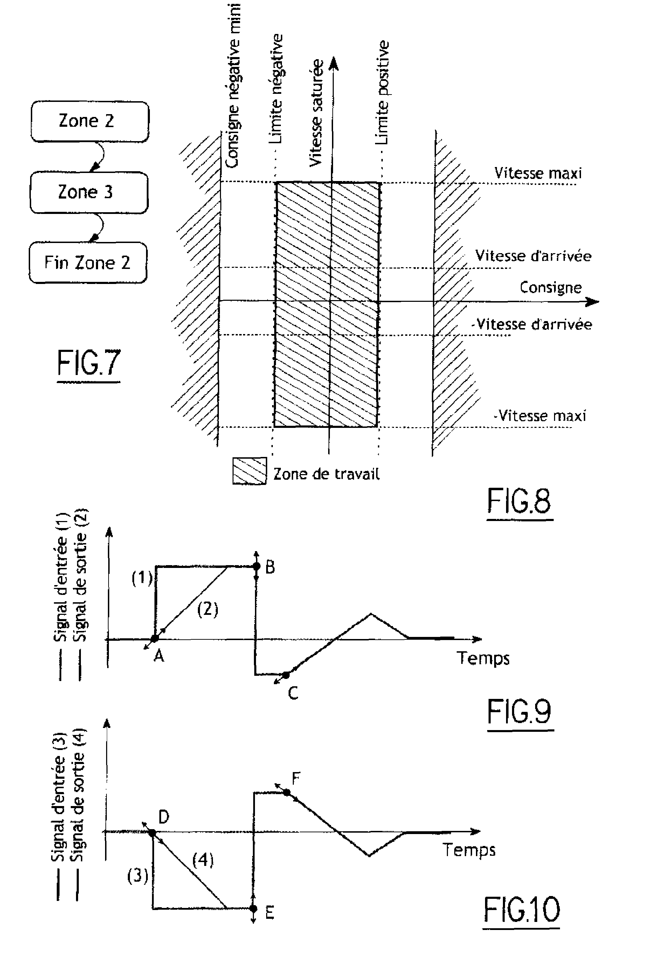

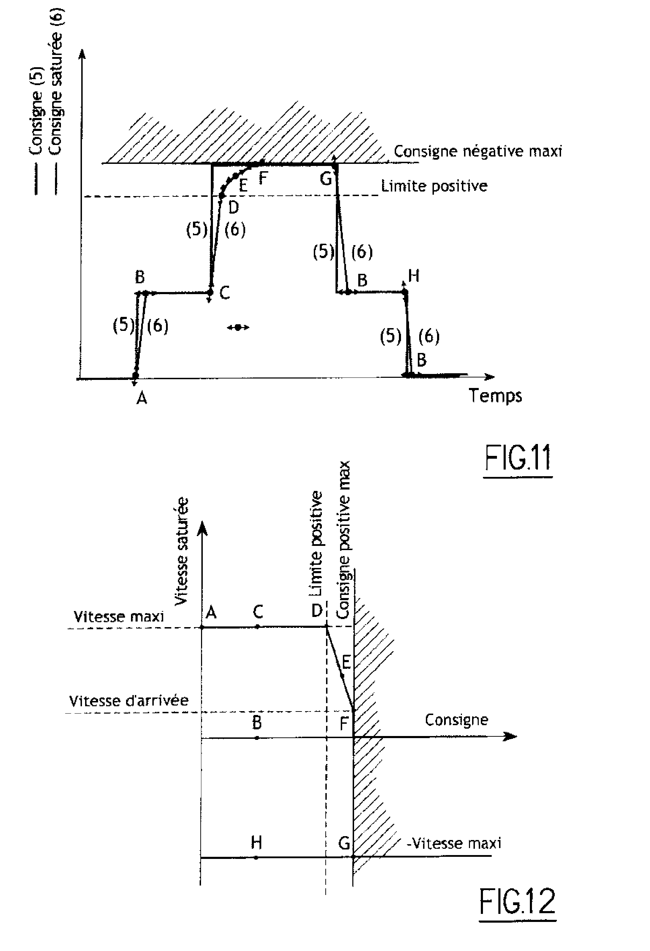

En revanche, si la réponse au test 36 est négative, le procédé met en oeuvre le traitement associé à la zone 2 et illustré aux figures 7 et 8. Il s'agit cette fois de la zone de travail dans laquelle l'abscisse de la pièce est limitée seulement par les limites positive et négative en se trouvant entre celles-ci, et la vitesse est limitée seulement par les valeurs « vitesse maxi » et « - vitesse maxi » en se trouvant entre celles-ci. Cette zone a ainsi une forme rectangulaire et occupe partiellement chacun des quatre quadrants. L'algorithme alors mis en oeuvre correspond, comme illustré à la figure 7, à l'algorithme de la zone 3.

La partie de l'algorithme correspondant à la zone 3 comporte tous les couples consigne-vitesse de signes opposés. Cela représente l'ensemble des points qui favorisent l'éloignement des limites. Dans cette plage, la vitesse ne peut pas dépasser les constantes + ou - vitesse maxi. On remarquera que la zone 3 recouvre en partie la zone 2.

Ces deux zones obéissent en pratique aux mêmes conditions sans qu'il faille ajouter de condition supplémentaire. De même, elles font l'objet du même traitement.

Comme on le voit, la mise en oeuvre du procédé dans le présent mode de réalisation implique de façon obligatoire ou optionnelle suivant les cas de déterminer :

- une zone où se trouve la pièce parmi au moins deux zones prédéterminées ;
- une vitesse de la pièce :

- un sens de déplacement de la piéce ; et
- si la pièce se déplace en direction opposée à la limite de course la plus proche parmi deux limites de course de la pièce.

Le procédé met en oeuvre pareillement de façon obligatoire ou optionnelle :

- une comparaison de la position de la pièce avec au moins une limite de course prédéterminée ;
- une comparaison de la position de la pièce avec au moins un seuil prédéterminé différent d'une limite de course ; et
- une comparaison d'une vitesse de la pièce avec la vitesse maximale.

On voit également que, suivant les cas, on détermine la vitesse de déplacement :

- en fonction d'une position de la pièce ; et/ou
- en fonction d'un sens de déplacement de la pièce.

De même, on détermine la vitesse maximale en fonction de la position de la pièce dans certains cas.

Par ailleurs, dans certains cas, la vitesse maximale autorisée pour la pièce sera indépendante de l'abscisse de la pièce pourvu que cette abscisse se trouve dans certaines zones, tandis que dans d'autres cas la vitesse maximale sera directement dépendante de l'abscisse et calculée en fonction de celle-ci.

Finalement, on observe qu'on commande tantôt le déplacement de la pièce à la vitesse maximale autorisée, tantôt à une vitesse inférieure à cette vitesse maximale.

Le gabarit illustré à la figure 1 pourra être établi par exemple au moyen d'un limiteur de rampe d'un type connu en soi qui permet de limiter la pente, c'est-à-dire la dérivée, d'un signal de consigne.

Les effets d'un tel limiteur de rampe sont illustrés à titre d'exemples aux figures 9 et 10 qui montrent chacune à titre de comparaison l'évolution en fonction du temps entre un signal d'entrée ou signal brut, et un signal de sortie ou signal limité. Le limiteur a en l'espèce pour effet de limiter la pente du signal à 1, comme c'est le cas au point A. En revanche, cette pente peut être égale à « $-\infty$ » comme c'est le cas en B. Dans cet exemple, le limiteur de rampe obéit à une constante mais cette limitation pourra être à l'inverse une variable définie en fonction du signal.

La figure 10 montre à l'inverse la limitation de la rampe avec une constante égale à -1.

On a représenté à la figure 11 l'évolution d'une position d'une pièce lorsque le signal de consigne fait l'objet d'une limitation de rampe et lorsqu'il n'en fait pas l'objet. Sur la courbe (6) de la consigne saturée, on voit apparaître les caractéristiques de la saturation. Ainsi, au point F, la consigne a atteint la valeur maximum qu'elle ne doit pas dépasser.

La limite positive en ordonnée représente la valeur de consigne à partir de laquelle la vitesse de la consigne sera limitée en fonction de la position de la pièce.

Enfin, la vitesse d'arrivée au point F représente la vitesse de la consigne au moment où le système a atteint la consigne maximum.

La courbe de la figure 11 permet de construire une partie du diagramme de la figure 1, comme illustré à la figure 12. Nous retrouvons en abscisse la valeur de la consigne et en ordonnée la valeur de la vitesse maximum de consigne autorisée. Les pentes de la figure 11 ont été reportées sur le gabarit de la figure 12.

L'invention constitue ainsi un limiteur logiciel de consigne de position associé à un système actif du véhicule. Elle s'intègre dans un système global dont l'architecture matérielle comprend au moins un dispositif de pilotage électronique apte à mettre en oeuvre le procédé de l'invention et associé au(x) capteur(s) nécessaire(s) à cette fin.

Bien entendu, on pourra apporter à l'invention de nombreuses modifications sans sortir du cadre de celle-ci.

**Revendications**

1. Procédé de commande d'un organe de véhicule dans lequel on commande un déplacement d'une pièce au moyen d'une consigne de position, **caractérisé en ce qu'**on commande le déplacement à une vitesse inférieure ou égale à une vitesse maximale prédéterminée.

2. Procédé selon la revendication précédente, **caractérisé en ce qu'**on détermine une position de la pièce.

3. Procédé selon l'une quelconque des revendications précédentes, **caractérisé en ce qu'**on détermine dans quelle zone se trouve la pièce parmi au moins deux zones prédéterminées.

4. Procédé selon l'une quelconque des revendications précédentes, **caractérisé en ce qu'**on détermine une vitesse de la pièce.

5. Procédé selon l'une quelconque des revendications précédentes, **caractérisé en ce qu'**on détermine un sens de déplacement de la pièce.

6. Procédé selon l'une quelconque des revendications précédentes, **caractérisé en ce qu'**on détermine si la pièce se déplace en direction opposée à la limite de course la plus proche parmi deux limites de course de la pièce.

7. Procédé selon l'une quelconque des revendications précédentes, **caractérisé en ce qu'**on compare une position de la pièce avec au moins une limite de course prédéterminée.

8. Procédé selon l'une quelconque des revendications précédentes, **caractérisé en ce qu'**on compare une position de la pièce avec au moins un seuil prédéterminé différent d'une limite de course.

9. Procédé selon l'une quelconque des revendications précédentes, **caractérisé en ce qu'**on compare une vitesse de la pièce avec la vitesse maximale.

10. Procédé selon l'une quelconque des revendications précédentes, **caractérisé en ce qu'**on détermine au moins l'une parmi la vitesse de déplacement et la vitesse maximale en fonction d'une position de la pièce.

11. Procédé selon l'une quelconque des revendications précédentes, **caractérisé en ce qu'**on détermine au moins l'une parmi la vitesse de déplacement et la vitesse maximale en fonction d'un sens de déplacement de la pièce.

12. Procédé selon l'une quelconque des revendications précédentes, **caractérisé en ce qu'**on commande le déplacement de sorte qu'il existe un ensemble de positions de la pièce telles qu'à deux positions quelconques de l'ensemble on associe des vitesses maximales différentes.

13. Procédé selon l'une quelconque des revendications précédentes, **caractérisé en ce qu'**on commande le déplacement de sorte qu'il existe un ensemble de positions de la pièce telles que la vitesse maximale est identique pour toutes les positions de cet ensemble.

14. Procédé selon l'une quelconque des revendications précédentes, **caractérisé en ce qu'**on commande le déplacement à une vitesse inférieure à la vitesse maximale prédéterminée.

15. Procédé selon l'une quelconque des revendications précédentes, **caractérisé en ce qu'**on commande le déplacement à la vitesse maximale prédéterminée.

16. Dispositif de commande d'un organe de véhicule comprenant des moyens de commande d'un déplacement d'une pièce au moyen d'une consigne de position, **caractérisé en ce que** les moyens de commande sont agencés pour commander le déplacement à une vitesse inférieure ou égale à une vitesse maximale prédéterminée.

FIG.1

Début

Constantes :
 Vit_maxi = Valeur maxi
 Vit_arr = Vitesse arrivée
 Lim_pos = Limite positive
 Lim_nég = Limite négative
 FC_pos = Consigne positive maxi
 FC_nég = Consigne négative mini
— 2

Variables :
 Signe_pos = 1 {signe de la consigne de position}
 Vit = 0 {vitesse de la consigne}
— 4

Variable de l'entrées :
 cons = valeur de la consigne
— 6

8 — Vit = d(cons) / dt    (calcul de la vitesse)

(vit et cons ont le même signe?)

Vit x cons<0    Non    cons>Lim_pos    Non    Cons<Lim_nég    Non

22    36

10    Oui    Oui    Oui

38

Signe_pos = -signe_pos

Zone 3    Zone 1    Zone 2

FIN

FIG.2

Zone 3

abs_(Vit) <= abs(Vit_maxi)

Non

16

12

Oui

Vit<0

Non

Oui

18

20

Sortie_Vit = Vit

Sortie_Vit = -Vit_maxi

Sortie_Vit = Vit_maxi

14

Fin Zone 3

FIG.3

Consigne négative mini

-Limite négative

Vitesse saturée

-Limite positive

Consigne positive maxi

Vitesse maxi

Vitesse d'arrivée

Consigne

-Vitesse d'arrivée

-Vitesse maxi

Zone de travail

FIG.4

FIG.5

FIG.6

Zone 2

Zone 3

Fin Zone 2

FIG.7

Consigne négative mini

Limite négative

Vitesse saturée

Limite positive

Vitesse maxi

Vitesse d'arrivée

Consigne

-Vitesse d'arrivée

-Vitesse maxi

Zone de travail

FIG.8

Signal d'entrée (1)
Signal de sortie (2)

(1)

B

(2)

A

C

Temps

FIG.9

Signal d'entrée (3)
Signal de sortie (4)

F

D

(4)

(3)

E

Temps

FIG.10

FIG.11

FIG.12